# FASCICULE DE BREVET EUROPEEN

(11) **EP 0 408 446 B1**
(45) Date de publication et mention de la délivrance du brevet: **08.09.1993**
(21) Numéro de dépôt: 90401992.4
(22) Date de dépôt: 11.07.1990
(51) Int. Cl.: B65G 69/04, B65G 65/46, E01C 19/10, B65D 88/68

(54) **Appareil de dosage et de distribution en nappe de fibres**
Dosier- und Abgabevorrichtung für Fasern in Schichten
Device for dosing and distributing fibres into layers

(30) Priorité: 12.07.1989 FR 8909390
(43) Date de publication de la demande: 16.01.1991
(73) Titulaire: ENTREPRISE JEAN LEFEBVRE, F-92202 Neuilly-sur-Seine Cédex (FR)
(72) Inventeur: Crase, Gilbert, F-78590 Noisy Le Roi (FR); Vivier, Maurice, F-75015 Paris (FR)
(74) Mandataire: Ahner, Francis

(56) Documents cités:
- CH-A- 121 757
- DE-A- 1 925 470
- FR-A- 2 335 431
- GB-A- 913 671
- US-A- 3 602 380
- US-A- 4 469 216

## Description

La présente invention concerne un appareil de distribution et de dosage de fibres, notamment de fibres destinées à être incorporées dans des revêtements routiers.

Il est courant d'utiliser pour les revêtements routiers des enrobés, généralement des enrobés coulés à froid, incorporant des fibres synthétiques.

L'invention n'est cependant pas limitée à de telles fibres ; elle s'applique au contraire, de façon générale, à la distribution et au dosage de toutes sortes de fibres lorsque l'on souhaite obtenir en sortie de l'appareil un débit constant de fibres sous forme d'une nappe continue présentant, en direction transversale, une distribution d'épaisseur sensiblement uniforme sur toute sa largeur, c'est-à-dire lorsque l'on souhaite produire en continu à partir de fibres stockées en vrac (et donc foisonnées) un "tapis" de fibres d'épaisseur uniforme sur toute sa largeur.

Notamment, l'invention permet non seulement la réalisation d'enrobés à froid mais également celle d'enrobés à chaud, technique qui jusqu'à présent était difficile à mettre en oeuvre du fait de l'absence de doseur de fibre fonctionnant en continu qui pourrait être couplé aux centrales de fabrication d'enrobés à chaud de type continu ; on se contentait donc jusqu'à présent d'utiliser des centrales de type discontinu dans le malaxeur desquelles les fibres étaient introduites sous forme de paquets préconditionnés dans une enveloppe fusible.

L'invention permet également l'ajout de fibres à d'autres matériaux que les enrobés à chaud, par exemple à des matériaux routiers destinés à des couches de base de chaussées neuves ou à renforcer, ou à des fondations de chaussées neuves, ou pour doser des fibres destinées à du béton, etc..

On a déjà proposé de nombreux appareils de distribution et de dosage de matière à l'état divisé, parmi lesquels on peut citer le FR-A-1 582 845, ainsi que le FR-A-2 296 582 et son addition FR-E-2 335 431.

Les appareils décrits dans ces documents permettent d'assurer le "dévoûtage", c'est-à-dire qu'ils empêchent que ne se forment à la base de la masse de matière, en raison du tassement de celle-ci, des voûtes, c'est-à-dire des espaces vides, qui entraveraient l'extraction.

Ces différents dispositifs sont cependant essentiellement connus pour l'extraction de matières à l'état très finement divisé telles que de la farine, et leur fonctionnement ne s'est pas avéré satisfaisant avec des fibres, dont la tendance à foisonner (c'est-à-dire à occuper un volume notablement supérieur au volume propre de la matière) crée un obstacle nouveau à l'obtention d'une distribution convenable.

En outre, aucun de ces dispositifs ne permet de délivrer en sortie une nappe d'épaisseur uniforme de la matière qu'ils distribuent et qu'ils dosent.

En effet, les dispositifs des FR-A-2 296 582 et FR-E-2 335 431 ne délivrent en sortie la matière que par une tubulure cylindrique par laquelle s'écoule, à débit constant mais en vrac, la matière quant au dispositif du FR-A-1 582 845, s'il permet de délivrer la matière en sortie par une trappe allongée, on constate que, bien que globalement le débit total de matière soit constant dans le temps, ce débit n'est pas du tout uniforme sur la largeur de la trappe d'évacuation et présente une distribution sensiblement gaussienne (c'est-à-dire avec un débit maximal au centre, diminuant au fur et à mesure que l'on va vers les bords de la trappe). Ce dernier dispositif ne permet donc pas d'obtenir une nappe de matière présentant en direction transversale une distribution d'épaisseur sensiblement uniforme sur toute sa largeur, comme cela est nécessaire dans un certain nombre d'applications, typiquement pour incorporation dans des enrobés destinés à être coulés pour former un revêtement à froid.

La présente invention se propose de remédier à ces inconvénients, en proposant un appareil de distribution et de dosage de matière à l'état divisé qui, d'une part, soit utilisable lorsque cette matière est constituée d'une masse de fibres foisonnées et qui, d'autre part, permette d'obtenir en sortie une nappe continue d'épaisseur sensiblement uniforme sur toute sa largeur.

Cet appareil est du type général connu d'après le FR-A-2 296 582 précité, c'est-à-dire comprenant :
- un ensemble distributeur-dévoûteur comportant une trémie renfermant la matière à distribuer et présentant un fond sensiblement plan, une première fente, formée dans ce fond, permettant l'évacuation par gravité de la matière hors de la trémie, etdes moyens dévoûteurs rotatifs comportant des éléments déformables s'étendant horizontalement au-dessus du fond de la trémie et parallèlement à celui-ci, ces éléments venant balayer l'espace situé au-dessus de la première fente, et
- un ensemble doseur comportant un réceptacle placé sous le fond de la trémie et recevant la matière tombant par la première fente et, dans ce réceptacle, des moyens extracteurs comprenant au moins une spire entraînée en rotation sur elle-même de façon continue de manière à obtenir un débit de matière constant, ajustable en fonction de la vitesse de rotation de la spire.

Selon l'invention, l'appareil présente la combinaison de caractéristiques suivantes :
- il est destiné à distribuer et à doser une matière constituée d'une masse de fibres foisonnées, notamment de fibres destinées à être incorporées dans des revêtements routiers,
- les moyens extracteurs comprennent une pluralité de spires parallèles simultanément entraînées,
- la première fente s'étend transversalement par rapport à la direction longitudinale des spires, sa longueur étant au plus égale à la dimension transversale de la série de spires et ladite fente étant située sensiblement à l'une des extrémités des spires, et
- les spires débouchent, à leur autre extrémité, sur une seconde fente formée dans le fond du réceptacle et orientée parallèlement à la première fente,

Avantageusement, cette configuration présente également les caractéristiques suivantes :
- la trémie étant sensiblement cylindrique ou conique, la première fente s'étend suivant la direction d'une corde du cercle de raccordement de la trémie à son fond, de préférence sensiblement sur toute la longueur de ladite corde, l'angle au centre de cette dernière étant sensiblement un angle droit.
- les éléments déformables des moyens dévoûteurs sont des éléments élastiquement déformables et, au repos, ils s'étendent horizontalement le long d'un axe moyen situé à distance de l'axe vertical, de préférence à mi-distance par rapport à la première fente.
- il est prévu, de part et d'autre de la série de spires s'étendant au-dessous de la première fente, au moins une spire supplémentaire entraînée simultanément avec les autres.
- le rapport longueur/largeur de la première fente est compris entre 4/1 et 10/1.
- la seconde fente est prolongée en partie inférieure par un conduit vertical débouchant sur une goulotte d'évacuation comportant une rampe inclinée de largeur allant décroissant vers le bas.
- des moyens sont en outre prévus pour modifier la largeur de la première et/ou de la seconde fente.
- les spires sont des spires interchangeables de nombre et/ou de diamètre et/ou de pas différents ; en cas d'utilisation de spires de diamètres différents, il est alors prévu des moyens pour modifier le niveau du plancher du réceptacle.

On va maintenant décrire un exemple de réalisation de l'invention, en référence aux dessins annexés.

La figure 1 est une vue perspective schématique de l'appareil de l'invention, qui en montre les différents éléments.

La figure 2 est une vue en coupe, selon II-II de la figure 3, de l'ensemble distributeur-dévoûteur et doseur de cet appareil, incorporant les caractéristiques de l'invention.

La figure 3 est une vue en coupe, selon III-III de la figure 2, de ce même ensemble.

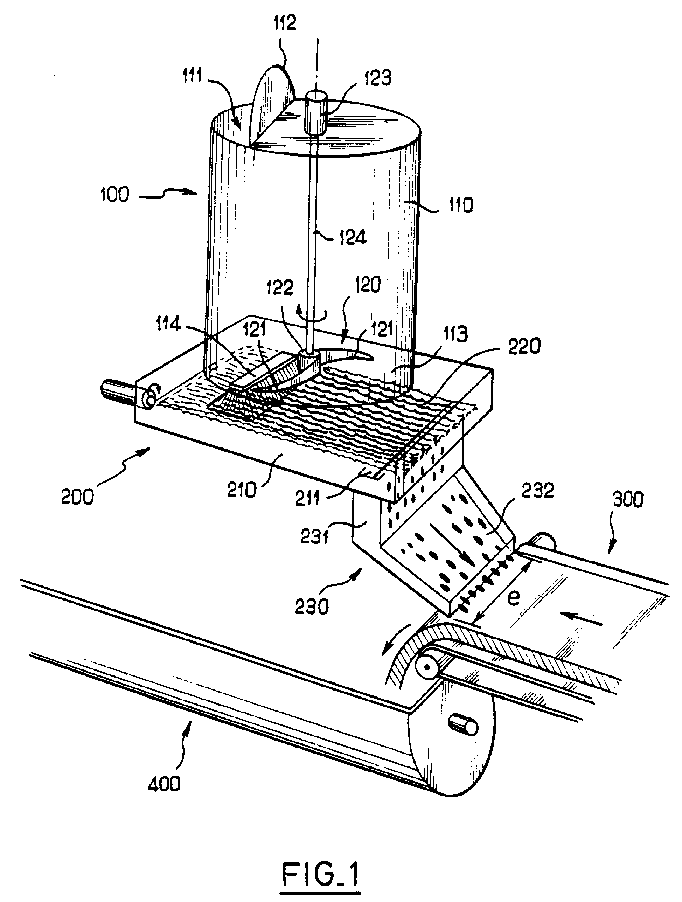

La figure 1 montre schématiquement les différents organes de l'appareil de l'invention.

Cet appareil comporte tout d'abord un ensemble distributeur-dévoûteur 100 comprenant une trémie cylindrique 110 et des moyens dévoûteurs rotatifs 120, situés à la base de cette trémie et permettant d'empêcher la formation de vides à la base de la masse de matière, qui empêcheraient l'extraction convenable de celle-ci.

Sous l'ensemble 100 est disposé un doseur 200 formé, de manière en elle-même connue, d'un réceptacle 210 logeant une série de spires 220 entraînées en rotation sur elles-mêmes de façon continue. En sortie du doseur 200, le matériau tombe dans une goulotte comportant une cheminée verticale 231 et un plan incliné 232, légèrement rétréci vers le bas, qui délivre sur une largeur *e* une nappe de fibres dont la distribution est sensiblement homogène (non gaussienne) sur toute la largeur du front de la nappe. Cette nappe de fibres est déposée sur une lame de granulat 300 entrainée de façon continue, l'ensemble granulat + fibres aboutissant dans un malaxeur 400 pour élaboration de l'enrobé qui sera ensuite coulé pour former le revêtement routier.

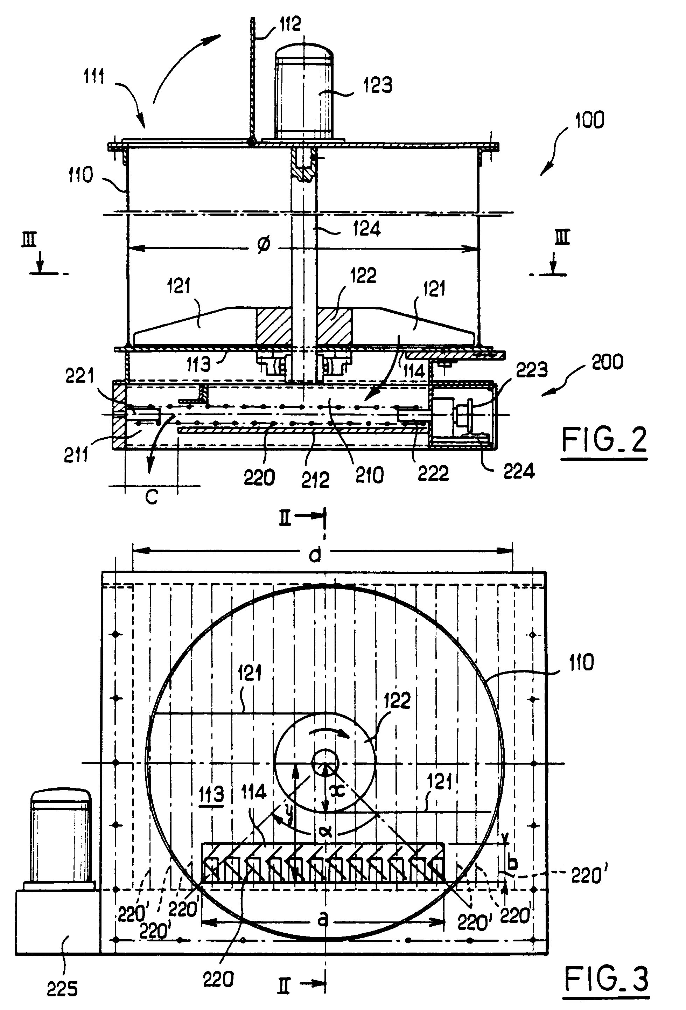

On va maintenant décrire plus en détail les différents organes de cet appareil, en référence notamment aux figures 2 et 3.

La trémie 110 est constituée d'une cuve réservoir sensiblement cylindrique de diamètre ⌀, par exemple une cuve de 250 litres de diamètre ⌀ = 560 mm. Cette cuve est remplie par un orifice de chargement 111 qui peut être fermé par un volet 112. La charge peut être par exemple constituée, pour fabriquer des enrobés coulés à froid destinés à former des revêtements routiers, de fibres synthétiques telles que des fibres synthétiques acryliques de 4 à 8 mm de longueur, de masse linéique 1,4 décitex et d'hygrométrie inférieure à 50 %.

Le fond 113 de la trémie est un fond plat, et il comporte une ouverture 114 par laquelle les fibres contenues dans la trémie vont tomber en chute libre dans le réceptacle 210 du doseur 200.

L'ouverture 114 est de préférence une ouverture rectangulaire disposée comme illustré figure 3, c'est-à-dire sensiblement sur toute la longueur d'une corde du cercle de raccordement de la trémie cylindrique au fond 113, cette corde présentant un angle au centre α d'environ 90°. Pour le type de fibres mentionnées plus haut, on peut choisir pour l'ouverture 114 une longueur *a* = 360 mm et une largeur *b* = 60 mm. On notera cependant que ces dimensions peuvent varier notablement avec la nature des fibres à doser, car l'effet de tassement des fibres foisonnées est susceptible de varier de façon importante avec la longueur des fibres et leur humidité. Avantageusement, pour pouvoir prendre en compte des fibres très différentes avec un même appareil, on prévoit des moyens (non représentés, mais en eux-mêmes connus) pour ajuster la largeur de la fente 114, par exemple un système à volet réglable ou à guillotine, ou encore un système à plaques interchangeables. En revanche, la largeur *a* de la fente 114 n'a pas besoin d'être ajustée en fonction des fibres ; cette dimension n'est essentiellement déterminée que par la largeur de la nappe de fibres que l'on souhaite obtenir en sortie.

Le distributeur 100 comporte en outre des moyens dévoûteurs d'un type comparable à ceux proposés par le FR-A-2 296 582 précité, c'est-à-dire comportant des éléments déformables 121 fixés à un moyeu rigide 122 entraîné en rotation par un moteur 123, hydraulique ou électrique, par l'intermédiaire d'un arbre vertical d'entraînement 124.

Ces moyens dévoûteurs ont cependant dû être adaptés à la nature fibreuse particulière de la matière à distribuer, compte tenu notamment de sa tendance à foisonner. A cet effet, on choisit une vitesse d'entraînement en rotation très réduite (typiquement, de l'ordre de 3,5 tours par minute) et on choisit comme élément déformable 121 des éléments élastiquement déformables et non des éléments nécéssairement dépourvus de rigidité propre, tels que des courroies ou des chaînes soumises à un effet centrifuge, comme l'enseignait le FR-A-2 296 582. Dans l'exemple illustré, les éléments déformables de l'invention sont constitués de deux aubes en acier à lame balayant, à vide, la quasi-totalité de la surface du fond de la trémie.

En outre, de façon également caractéristique de l'invention, les aubes élastiques 121 s'étendent tangentiellement par rapport à un cercle de rayon *x* qui est sensiblement la moitié de la distance *y* séparant l'ouverture 114 de l'axe central 124. On a constaté en effet que cette configuration permet d'assurer un effet optimal de dévoûtage des fibres foisonnées.

On va maintenant décrire l'ensemble doseur 200 recevant les fibres dévoûtées délivrées par le distributeur 110.

Les fibres tombent, sur toute la largeur de la fente, sur une série de spires parallèles 220 entrainées en rotation sur elles-mêmes de façon continue. Ces spires sont portées chacune à l'une de leur extrémité par un palier 221 et à l'autre extrémité par l'arbre 222 d'un système d'entrainement comportant une poulie 223 entraînée par une chaîne crémaillère 224, commune à toutes les spires et elle-même entraînée par un moteur 225. Les spires sont des spires hélicoïdales en acier inoxydable rigide, présentant un faible effet d'élasticité propre.

Avantageusement, les spires sont des spires interchangeables de nombre et/ou de diamètre et/ou de pas différents, en fonction de la nature des fibres à doser (diamètre, longueur, etc.)

Ainsi, pour des fibres de 4 mm, on peut utiliser des spires dont le diamètre est de 12 mm et, pour des fibres de plus grande longueur, des spires de 24 mm de diamètre.

La vitesse de rotation du moteur 225 est variable, par exemple entre 10 et 40 tours par minute, en fonction du débit souhaité. On constate que le débit est proportionnel à la vitesse de rotation des spires et varie peu avec la charge (c'est-à-dire avec le niveau de remplissage de la trémie 110).

Grâce à ce dispositif de dosage à spires, en lui-même connu, les fibres dévoûtées évacuées par la fente 114 vont tomber à l'une des extrémités des spires et être transportées, le long du plancher 212 du réceptacle 210, par la rotation propre des spires jusqu'à l'autre extrémité de celles-ci, au droit d'une seconde fente 211 servant à évacuer les fibres dosées, et d'où elles seront transférées sur les granulats par la goulotte 230 (figure 1).

Dans l'exemple de réalisation correspondant aux données mentionnées plus haut, on utilise par exemple seize ou dix-huit spires extractrices de 12 mm de diamètre, avec douze spires situées directement au-dessous de l'ouverture 114 (spires 220 apparentes sur la figure 3) et, de part et d'autre de ces douze spires, deux ou trois spires supplémentaires 220' permettant d'assurer une bonne homogénéité de l'épaisseur de la nappe de fibres, même sur les bords de celle-ci.

On notera que, pour pouvoir employer des spires de diamètres différents, le niveau du plancher 212 du réceptacle 210 sera réglable en fonction du diamètre des spires 220 utilisées, et que le dispositif d'entraînement sera compatible avec le montage de spires de diamètres différents.

La longueur *b* (figure 3) de la seconde fente de distribution 211 est choisie de manière à couvrir toute la largeur de l'ensemble de spires, et elle est donc supérieure à la longueur *a* de la première fente. On peut choisir par exemple, avec les cotes indiquées plus haut, une largeur de distribution de 600 mm. Cette largeur de distribution sera légèrement réduite par le plan incliné rétréci 232, pour obtenir une largeur de distribution finale *e* (figure 1) de 450 mm maximum, par exemple.

Avantageusement, la dimension transversale *c* (figure 2) de la seconde fente 211 est ajustable, comme dans le cas de la première fente 114, de manière à s'adapter à des fibres de longueurs différentes. On a constaté que, pour des fibres de 4 à 8 mm, une dimension *c* de l'ordre de 80 mm procurait des résultats satisfaisants. On peut également ajouter dans le même but, en sortie des spires et à leur affleurement, une bavette (non représentée) dont la hauteur sera choisie de manière à régulariser le débit de fibres en sortie.

## Revendications

1. Un appareil de distribution et de dosage de matière à l'état divisé, du type comprenant :
- un ensemble distributeur-dévoûteur (100) comportant :
. une trémie (110) renfermant la matière à distribuer et présentant un fond (113) sensiblement plan,
. une première fente (114), formée dans ce fond, permettant l'évacuation par gravité de la matière hors de la trémie,
. des moyens dévoûteurs (120) rotatifs comportant des éléments déformables (121) s'étendant horizontalement au-dessus du fond de la trémie et parallèlement à celui-ci, ces éléments venant balayer l'espace situé au-dessus de la première fente, et
- un ensemble doseur (200) comportant :
. un réceptacle (210) placé sous le fond de la trémie et recevant la matière tombant par la première fente,
. dans ce réceptacle, des moyens extracteurs comprenant au moins une spire (220) entraînée en rotation sur elle-même de façon continue de manière à obtenir un débit de matière constant, ajustable en fonction de la vitesse de rotation de la spire,
caractérisé en ce que :
- il est destiné à distribuer et à doser une matière constituée d'une masse de fibres foisonnées, notamment de fibres destinées à être incorporées dans des revêtements routiers,
- les moyens extracteurs comprennent une pluralité de spires (220) parallèles simultanément entraînées,
- la première fente s'étend transversalement par rapport à la direction longitudinale des spires, sa longueur (a) étant au plus égale à la dimension transversale de la série de spires et ladite fente étant située sensiblement à l'une des extrémités des spires, et
- les spires débouchent, à leur autre extrémité, sur une seconde fente (211) formée dans le fond du réceptacle et orientée parallèlement à la première fente,
de manière à obtenir en sortie un débit constant de fibres sous forme d'une nappe continue de fibres présentant en direction transversale une distribution d'épaisseur sensiblement uniforme sur toute sa largeur.

2. Le dispositif de la revendication 1, dans lequel, la trémie étant sensiblement cylindrique ou conique, la première fente s'étend suivant la direction d'une corde du cercle de raccordement de la trémie à son fond.

3. Le dispositif de la revendication 2, dans lequel la première fente s'étend sensiblement sur toute la longueur de ladite corde.

4. Le dispositif de la revendication 3, dans lequel l'angle au centre (α) de ladite corde est sensiblement un angle droit.

5. Le dispositif de l'une des revendications 1 à 4, dans lequel les éléments déformables (121) des moyens dévoûteurs sont des éléments élastiquement déformables.

6. Le dispositif de l'une des revendications 1 à 5, dans lequel, au repos, les éléments déformables (121) des moyens dévoûteurs s'étendent horizontalement le long d'un axe moyen situé à distance de l'axe vertical.

7. Le dispositif de la revendication 6, dans lequel la distance de l'axe moyen par rapport à l'axe vertical est sensiblement la moitié de la distance de la première fente par rapport à l'axe vertical.

8. Le dispositif de l'une des revendications 1 à 7, dans lequel il est prévu, de part et d'autre de la série de spires (220) s'étendant au-dessous de la première fente, au moins une spire supplémentaire (220') entraînée simultanément avec les autres.

9. Le dispositif de l'une des revendications 1 à 8, dans lequel le rapport longueur/largeur (a/b) de la première fente est compris entre 4/1 et 10/1.

10. Le dispositif de l'une des revendications 1 à 9, dans lequel la seconde fente (211) est prolongée en partie inférieure par un conduit vertical (231) débouchant sur une goulotte d'évacuation (232) comportant une rampe inclinée de largeur allant décroissant vers le bas.

11. Le dispositif de l'une des revendications 1 à 10, comprenant en outre des moyens pour modifier la largeur de la première fente.

12. Le dispositif de l'une des revendications 1 à 11, comprenant en outre des moyens pour modifier la largeur de la seconde fente.

13. Le dispositif de l'une des revendications 1 à 12, dans lequel les spires sont des spires interchangeables de nombre et/ou de diamètre et/ou de pas différents.

14. Le dispositif de la revendication 13, comprenant en outre des moyens pour modifier le niveau du plancher (212) du réceptacle (210) en cas d'utilisation de spires de diamètres différents.

## Patentansprüche

1. Vorrichtung zum Abgeben und Dosieren eines zerteilten Materials mit
- einer Abgabe- und Wölbungsbildungsverhinderungsanordnung (100), die
- einen Bunker (110), der das abzugebende Material enthält und einen im wesentlichen ebenen Boden (113) aufweist,
- einen ersten Schlitz (114), der im Boden ausgebildet ist und es erlaubt, das Material vom Bunker über das Eigengewicht abzuführen,
- und rotierende Wölbungsbildungsverhinderungseinrichtungen (120) mit verformbaren Elementen (121) umfaßt, die horizontal über dem Boden des Bunkers und parallel dazu verlaufen, wobei diese Elemente den Raum über dem ersten Schlitz bestreichen, und
- mit einer Dosieranordnung (200), die
- einen Aufnahmebehälter (210), der unter dem Boden des Bunkers angeordnet ist und das Material aufnimmt, das durch den ersten Schlitz herunterfällt, und
- im Aufnahmebehälter Abzieheinrichtungen mit wenigstens einem Schraubengang (220) umfaßt, der daran fortlaufend so in Drehung versetzt wird, daß eine konstante Materialabgabe erzielt wird, die in Abhängigkeit von der Drehgeschwindigkeit des Schraubenganges einstellbar ist, dadurch gekennzeichnet, daß
- sie zum Abgeben und Dosieren eines Materials bestimmt ist, das aus einer Masse gewachsener Fasern, insbesondere Fasern besteht, die zur Anordnung in Fahrbahndecken bestimmt sind,
- die Abzieheinrichtungen mehrere parallele Schraubengänge (220) umfassen, die gleichzeitig in Drehung versetzt werden,
- der erste Schlitz quer bezüglich der Längsrichtung der Schraubengänge verlaufen, wobei seine Länge (a) höchstens gleich der Querabmessung der Reihe von Schraubengängen ist und der Schlitz im wesentlichen an einem Ende der Schraubengänge angeordnet ist, und
- die Schraubengänge an ihrem anderen Ende an einem zweiten Schlitz (211) münden, der im Boden des Aufnahmebehälters ausgebildet und parallel zum ersten Schlitz ausgerichtet ist, derart, daß am Ausgang eine konstante Abgabe an Fasern in Form einer fortlaufenden Fasermatte erhalten wird, die in Querrichtung einen im wesentlichen über die gesamte Länge gleichmäßigen Verlauf der Dicke hat.

2. Vorrichtung nach Anspruch 1, bei der bei einem im wesentlichen zylindrischen oder konischen Bunker der erste Schlitz in einer Richtung der Sehne des Stoßkreises des Bunkers an seinem Boden verläuft.

3. Vorrichtung nach Anspruch 2, bei der der erste Schlitz im wesentlichen über die gesamte Länge dieser Sehne verläuft.

4. Vorrichtung nach Anspruch 3, bei der der Mittelpunktswinkel (α) dieser Sehne im wesentlichen ein rechter Winkel ist.

5. Vorrichtung nach einem der Ansprüche 1 bis 4, bei der die verformbaren Elemente (121) der Wölbungsbildungsverhinderungseinrichtungen elastisch verformbare Elemente sind.

6. Vorrichtung nach einem der Ansprüche 1 bis 5, bei der im Ruhezustand die verformbaren Elemente (121) der Wölbungsbildungsverhinderungseinrichtungen horizontal längs einer mittleren Achse verlaufen, die in einem Abstand von der vertikalen Achse liegt.

7. Vorrichtung nach Anspruch 6, bei der der Abstand der mittleren Achse bezüglich der vertikalen Achse im wesentlichen gleich der Hälfte des Abstandes des ersten Schlitzes von der vertikalen Achse ist.

8. Vorrichtung nach einem der Ansprüche 1 bis 7, bei der auf beiden Seiten der Reihe von Schraubengängen (220), die unter dem ersten Schlitz verlaufen, wenigstens ein Zusatzschraubengang (220') vorgesehen ist, der gleichzeitig mit den anderen angetrieben wird.

9. Vorrichtung nach einem der Ansprüche 1 bis 8, bei der das Verhältnis Länge : Breite (a/b) des ersten Schlitzes zwischen 4:1 und 10:1 liegt.

10. Vorrichtung nach einem der Ansprüche 1 bis 9, bei der der zweite Schlitz (211) am unteren Teil durch eine vertikale Leitung (231) verlängert ist, die an einer Ableitrutsche (232) mündet, die eine schräge Rampe umfaßt, deren Breite nach unten abnimmt.

11. Vorrichtung nach einem der Ansprüche 1 bis 10, welche weiterhin Einrichtungen zum Ändern der Breite des ersten Schlitzes umfaßt.

12. Vorrichtung nach einem der Ansprüche 1 bis 11, welche weiterhin Einrichtungen zum Ändern der Breite des zweiten Schlitzes umfaßt.

13. Vorrichtung nach einem der Ansprüche 1 bis 12, bei der die Schraubengänge austauschbare Schraubengänge verschiedener Anzahl und/oder verschiedenen Durchmessers und/oder verschiedener Ganghöhe sind.

14. Vorrichtung nach Anspruch 13, welche weiterhin Einrichtungen zum Ändern der Höhe des Bodens (212) des Aufnahmebehälters (210) umfaßt, wenn Schraubengänge mit verschiedenen Durchmessern verwandt werden.

## Claims

1. Appliance for distributing and apportioning material in the divided state, of the type comprising:
- a distributing/de-bridging unit (100) including:
. a hopper (110) containing the material to be distributed and having a substantially flat base (113),
. a first slot (114), formed in this base, enabling the material to be discharged out of the hopper by gravity,
. rotary de-bridging means (120) having deformable members (121) extending horizontally above the base of the hopper and parallel to it, these members sweeping the space situated above the first slot, and
- an apportioning unit (200) including:
. a receptacle (210) placed underneath the base of the hopper and receiving the material falling through the first slot,
. in this receptacle, extraction means comprising at least one helix (220) driven so as to rotate on itself continuously in such a way as to obtain a constant flow of material, adjustable according to the speed of rotation of the helix,
characterised in that:
- it is intended to distribute and apportion a material consisting of a mass of expanded fibres, notably fibres intended to be incorporated in road surfaces,
- the extraction means comprise a plurality of parallel helixes (220) driven simultaneously,
- the first slot extends transversely with respect to the longitudinal direction of the helixes, its length (a) being at least equal to the transverse dimension of the series of helixes and the said slot being situated approximately at one end of the helixes, and
- the helixes discharge, at their other end, onto a second slot (211) formed in the base of the receptacle and oriented parallel to the first slot,
so as to obtain, at the outlet, a constant flow of fibres in the form of a continuous layer of fibres having, in the transverse direction, a distribution with a thickness which is substantially uniform over its entire width.

2. Device according to Claim 1, in which, the hopper being substantially cylindrical or conical, the first slot lies along a chord of the circle formed by the connection of the hopper to its base.

3. Device according to Claim 2, in which the first slot extends substantially over the entire length of the said chord.

4. Device according to Claim 3, in which the angle at the centre (a) of the said chord is approximately a right angle.

5. Device according to one of Claims 1 to 4, in which the deformable members (121) of the de-bridging means are elastically deformable members.

6. Device according to one of Claims 1 to 5, in which, at rest, the deformable members (121) of the de-bridging means lie horizontally along a mid-axis situated at a distance from the vertical axis.

7. Device according to Claim 6, in which the distance of the mid-axis with respect to the vertical axis is approximately half the distance of the first slot with respect to the vertical axis.

8. Device according to one of Claims 1 to 7, in which, on each side of the series of helixes (220) lying underneath the first slot, at least one additional helix (220') is provided, driven simultaneously with the others.

9. Device according to one of Claims 1 to 8, in which the length/width ratio (a:b) of the first slot is between 4:1 and 10:1.

10. Device according to one of Claims 1 to 9, in which the first slot (211) is extended, at the bottom, by a vertical duct (231) opening out onto a discharge chute (232) having an inclined ramp with a width which decreases towards the bottom.

11. Device according to one of Claims 1 to 10, also comprising means for modifying the width of the first slot.

12. Device according to one of Claims 1 to 11, also comprising means for modifying the width of the second slot.

13. Device according to one of Claims 1 to 12, in which the helixes are interchangeable helixes in different amounts and/or with different diameters and/or pitches.

14. Device according to Claim 13, also comprising means for modifying the level of the base (212) of the receptacle (210) where helixes with different diameters are used.
